# EUROPEAN PATENT APPLICATION

(11) **EP 0 626 308 A1**
(43) Date of publication of application: **30.11.1994**
(21) Application number: 94108157.2
(22) Date of filing: 26.05.1994
(51) Int. Cl.: B62D 25/18

(54) **Device for reducing the spray flung upwards from the wheels of a vehicle**

(30) Priority: 27.05.1993 FI 932418
(71) Applicant: OY PARLOK AB, SF-21600 Parainen (FI)
(72) Inventor: Kilpinen, Seppo, SF-21600 Parainen (FI)
(74) Representative: Görg, Klaus, Dipl.-Ing.

(57) **Abstract**

A device for reducing spray flung upwards from the wheels (10) of a vehicle. The device comprises a splash guard (12), such as a mudguard and/or a splash flap, and a ribbed plate (16) for guiding the spray, disposed inside the splash guard (12). The ribbed plate (16) is formed from sheetlike material by corrugating it in the way that ridges (18) and recesses (24) are formed in the plate (16). In the ridges (18) facing the splash guard have been made openings (26) for guiding the spray through the ribbed plate (16) towards the splash guard (12). The ridges have preferably been formed in the way that the spray hitting the ribbed plate meets an inclined surface on the plate formed by the ridges.

## Description

The present invention relates to a device for reducing spray flung upwards from the wheels of a vehicle, which device comprises a splash guard, such as a mudguard and/or a splash flap, and means guiding the spray, disposed on the wheel-facing surface of the splash guard at least behind the wheel in relation to the direction of the movement of the vehicle.

The invention relates thus to a spray-suppressing device intended for use in commercial vehicles for reducing problems caused to other motorists by water and other spray and thus for improving the safety on the roads. In addition to ordinary splash guards, mudguards and mud flaps, a layer of some spray-suppressing material or some splash-guiding elements are being used even now.

The object of the layers of spray-suppressing material is to attenuate the kinetic energy of the water and mist emitted from the tyres of the vehicle and to retain the water in order to reduce the turbulent spray. The water-guiding elements are designed to direct the water hitting the mudguards and mud flaps downwards in a controlled way.

The German patent application DE 39 39 937 (FIG. 9 - 11) discloses a mudguard which is fitted with a wall for guiding the water spray. The wall is composed of separate parallel lamellas, which are attached from their ends to the bent edges of the mudguard. The splash water runs out through a space between the wall and the mudguard. The lamellas are disposed in the way that the channels formed between them are essentially parallel with the movement of the water emitted from the wheel. The object of the device is to lead the major proportion of the spray water directly through the channels between the lamellas into the space between the wall of lamellas and the mudguard without the water touching the lamellas. This construction of lamellas is difficult and inconvenient to realize, because each lamella has to be attached to the mudguard separately. Also the spray-suppressive effect will remain relatively modest, as the kinetic energy of the passing water will not be attenuated and the water is not automatically directed forwards but can, because of the angle of the lamella, run back towards the wheel in the channel.

Another arrangement for retaining and guiding the spray water is disclosed in the British patent application GB 21 43 189. On the inside of the mudguard is arranged a flexible, water-retaining plate or surface, on the wheel-facing surface of which protrusions, lamellas or narrow folds have been arranged. The object of the protrusions is to guide the spray water outwards along them and towards the periferic zones of the mudguard, where there are channels for conducting the water to the ground. Thus the spray water does not pass through the flexible plate or surface to the opposite side of the plate.

The German application DE 40 27 073 discloses a cellular system for guiding the spray. The system is disposed on the inside of the splash guard, the edges being attached to the sides of the mudguard. The vertical walls of the cells or compartments are provided with openings, through which the water is being conducted sideways along the horizontal side walls towards the edges of the splash guard. Both the manufacture and the installation of the cellular system are difficult and complicated. Most of the water passes by the walls of the compartments and splashes back, when hitting the back wall.

It is an object of the present invention to provide a better device than the ones described above for retaining and guiding the spray water.

It is particularly an object of the invention to provide a device for reducing spray which is easy and advantageous to realize.

For achieving the above mentioned objects, the device for reducing spray flung upwards from the wheels of a vehicle is characterized in that the spray-guiding means attached to the splash guard comprises a ribbed plate formed from sheetlike material by corrugating it in the way that ridges and recesses are formed and that in the ridges facing the mudguard have been made openings for guiding the spray flung upwards from the wheels through the ribbed plate towards the mudguard.

The ribbed plate is preferably attached to the splash guard, i.e. the mudguard and/or the splash flap, in the way that the whole plate is essentially parallel with these. The ribbed plate is preferably disposed in the splash guard in the way that the ridges are essentially horizontal. The ribbed plate may of course be disposed in the splash guard with the ridges vertical or inclined.

According to a preferred embodiment, the height of the ridges is about 10 - 20 mm, preferably 15 mm, the distance between the ridges being about 10 - 20 mm, preferably 15 mm. In this case it is preferred to dispose the ribbed plate in the splash guard in the way that the ridges facing the splash guard are at a distance of about 5 - 15 mm, preferably 10 mm, from the splash guard.

In order to guide the spray water away from the wheel, slots, parallel with or vertical or inclined in relation to the ridges, are formed in the ridges facing the splash guard.

According to a preferred embodiment, the ridges of the splash guard facing the wheel are unsymmetrical in the way that the angle τ between the upper sides of the ridges and the splash guard is larger than the angle δ between the lower sides of the ridges and the splash guard. Thus the upper sides of the ridges and the openings in the recesses between the ridges on the ribbed plate when installed are mainly in the shade of the lower sides in the way that the spray flung upwards from the wheel will not directly hit the upper sides or the openings.

The ribbed plate is preferably installed so that the spray flung upwards from the wheel will meet the lower sides of the ridges at an angle α of about 55 - 65°, preferably 60°. The lower sides of the ridges of the ribbed plate are thus at an angle of about 50 - 60°, preferably 52,5°, in relation to the splash guard or the vertical.

The horizontal ridges of the ribbed plate facing the tyre are thus preferably unsymmetrical. When using a ribbed plate with vertical ridges, the ridges are formed either symmetrical or unsymmetrical in relation to the axial direction of the wheel in the way that the spray flung upwards by the wheel mainly hits the sides of the ridges at an angle β of about 55 - 60°.

The ribbed plate is preferably made of ductile plastic sheet, but can of course be made of other ductile material that can be corrugated or moulded and is able to resist the conditions prevailing in the vicinity of the vehicle wheels.

The ribbed plate can simply be made from a plastic sheet of the desired size by shaping it. The ridges can be formed on the plate by thermoforming, vacuumforming, cold working or corrugating by some other method. The platelike piece can naturally be made using a mould and some moulding technique, for instance by injection-moulding.

In the ridges, on one side of the plate, openings for the passing of the spray water are formed, either by cutting or in connection with the moulding process. The openings can either be round or slotlike. The slots can run parallel with the ridges or be inclined or vertical in relation to the ridges. The ribbed plate is attached to the interior side of the splash guard in the way that the side of the plate where the ridges are provided with openings is away from the wheel.

When a vehicle provided with the spray-reducing device according to the invention moves, the water emitted from the wheels hits an inclined surface of the ribbed plate, i.e. one of the sides of the ridges, at a certain, favourable angle. The water is directed along the inclined surface forwards into the openings in the recesses of the ribbed plate and through them into the space between the ribbed plate and the splash guard, from where the water runs in a controlled way downwards onto the road surface.

The recesses between the ridges thus form a favourable channel for leading, in a controlled manner, the spray water through the ribbed plate and off the wheel. On the other hand, the design of the recesses, which expand slightly downwards, is such that snow, sludge or mud do not easily stick to them blocking the access of the water into the openings. The angle between the ridges is for example 30 - 55°, preferably 35 - 45°.

In the following some of the advantages of the device according to the invention are mentioned:
- Easy fabrication. The ribbed plate may be produced in big sheets to be cut into plates of desired size and form.
- The openings can easily be worked mechanically, for instance by milling or sawing, or by some other suitable method, for instance in connection with the moulding. The openings can easily be aligned in the desired direction, either vertical or inclined in relation to the ridges, or parallel with them.
- The design of the splash guard/ribbed plate system is even and open, thus admitting without difficulty the water through the ribbed plate into the space between the plate and the splash guard. On the other hand, possible snow, ice or mud do not easily stick onto the ribbed plate.
- The ribbed plate provided with ridges is easy to bend when fitting it for instance inside the mudguard.
- The fixing points of the ribbed plate can be formed in connection with the working of the ridges of the ribbed plate. The fixing points are preferably designed in the way that a suitable space between the ribbed plate and, for instance, the mudguard is achieved by means of them. The fixing points can be peglike or, for instance, bars aligned vertically to the ridges, through the bottoms of which the ribbed plates can be attached to the mudguard by welding, rivetting or some other suitable method.

The invention will be described further, by way of examples, with reference to the accompanying drawings, in which
- Figure 1: is a diagrammatic side view of a vehicle wheel fitted with a ribbed plate and a splash guard according to the invention, the splash guard being partly shown in cross section
- Figure 2: is a diagrammatic front view at an angle of the splash guard fitted with the ribbed plate of figure 1,
- Figure 3: is a diagrammatic vertical cross section of the rear part of the splash guard of Fig. 1, which is fitted with a ribbed plate; and
- Figure 4: is a similar view to Figure 2 of a second splash guard provided with a ribbed plate according to the invention.

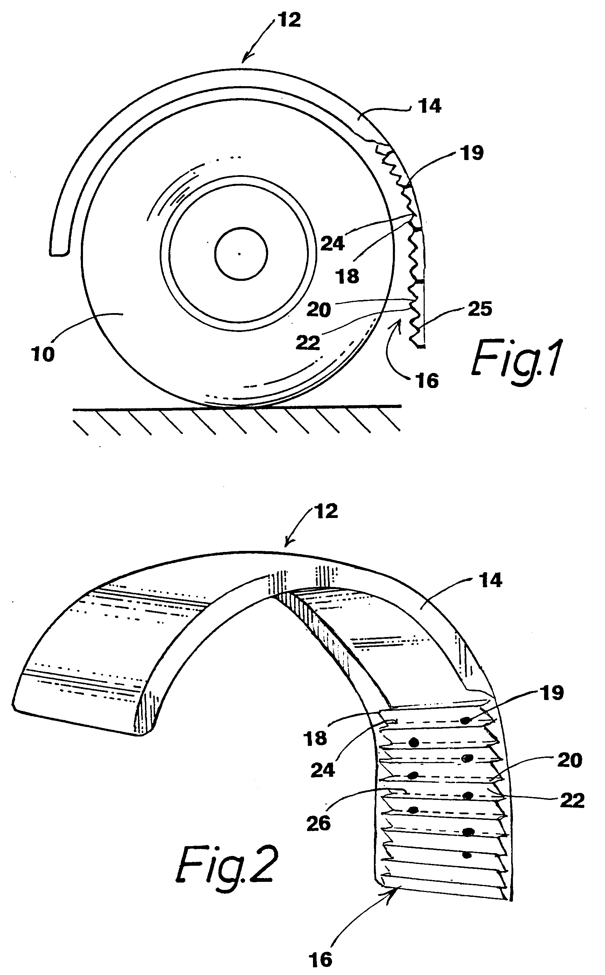

In Figure 1 a vehicle wheel 10 is shown, around which a splash guard 12 is disposed. The edge 14 of the splash guard is bent. At the rear part of the splash guard 12 has been attached a ribbed plate 16 of the same width and in the same direction as the splash guard, provided with horizontal ridges 18. The ribbed plate is provided with pegs 19 for fixing the plate to the splash guard.

Figure 2 illustrates the splash guard 12 with the ribbed plate seen from the front. The ridges 18 of the ribbed plate are unsymmetrical so that the upper sides 20 of the ridges are more at right angles to the splash guard than the lower sides 22 of the ridges. Slots 26 parallel with the ridges for leading away spray water have been formed in the recesses 24 between the ridges. The slots can of course alternatively run in some other direction. The recesses 24 form ridges 25 at the opposite side of the plate, i.e. the side facing the splash guard, the distance of which from the splash guard can be adjusted by altering the length of the fixing pegs 19.

Instead of fixing pegs, vertical fixing bars or troughs disposed at the edges of the ribbed plate can be used, the height/depth of which determines the distance of the plate from the splash guard. The bars or troughs also serve in directing downwards the water that runs sidewards in the ribbed plate.

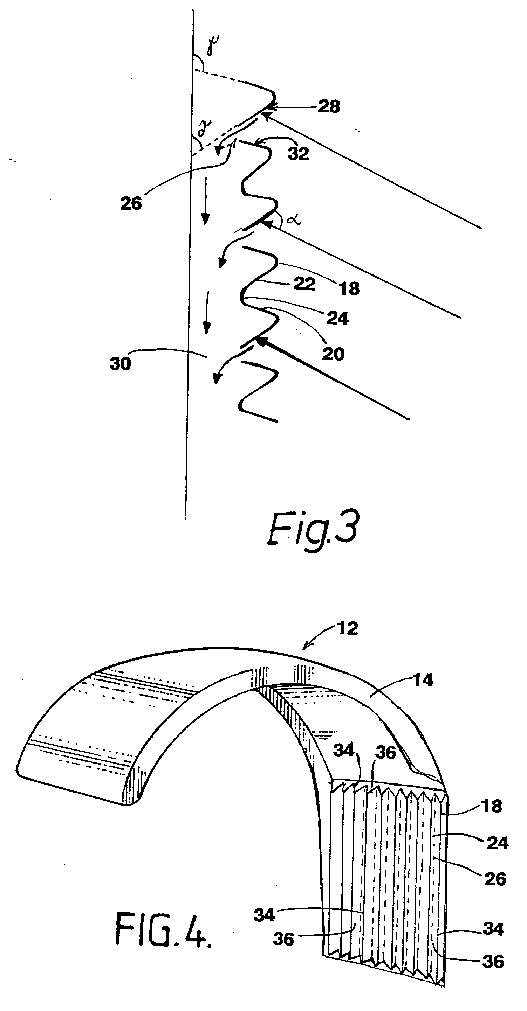

Figure 3 is an enlarged vertical cross section of the rear part of the splash guard 12 of Figure 1. The ribbed plate 16 attached to the splash guard is made of a corrugated sheet, where the ridges are unsymmetrical so that the angle τ between the upper side of the ridges and the splash guard is bigger than the angle δ between the lower side of the ridges and the splash guard. The corrugated ribbed plate 16 has been disposed on the splash guard in the way that the lower sides 22 of the ridges 18 meet the spray water at an angle α of about 60°. Hereby the upper sides 20 of the ridges and the recesses 24 between them remain in the shade of the lower sides and the water does not essentially reach them. The lower side is at an angle of about 50 - 60° to the vertical.

The splash water hits the lower sides 22 of the ridges and is directed, due to its kinetic energy, along the inclined surface 28 of the lower side of the ridge, to the recess 24 and towards opening 26, through which the water passes through the ribbed plate and is directed to a space 30 between the splash guard and the ribbed plate. Possible snow, sludge or mud stops at the opening in the recess and runs off the ribbed plate along the inclined surface 32 of the upper side 20 of the ridge.

Figure 4 shows another arrangement for reducing the spray water. The same reference numbers, when adaptable, have been used as in Figures 1 -3. In the arrangement according to Figure 4, a ribbed plate with vertical ridges 16 is disposed at the rear part of the splash guard. The ridges are unsymmetrical in the way that the first or outer sides 34 of the ridges, starting from the middle of the ribbed plate and going outwards, are more at right angles to the splash guard than the second or inner sides 36 of the ridges. In this way the splash water spray can be arranged to meet the inner sides of the ridges at an angle of about 60°. The inner sides 36 of the ridges and the openings 26 in the recesses 24 remain in the shade of the outer sides 34 of the ridges.

The invention is not restricted to the embodiments described and illustrated above but it can, on the contrary, be adapted according to the scope of protection defined by the appended claims. Thus the ribbed plate can, for instance, be arranged to extend over the total length of the splash guard or the ridges of the ribbed plate may run diagonally downwards. The ridges of the ribbed plate may be sharp edged, rounded or blunt.

## Claims

1. A device for reducing spray flung upwards from the wheels (10) of a vehicle , which device comprises a splash guard (12), such as a mudguard and/or a splash flap, and means for guiding the spray, disposed on the wheel-facing surface of the splash guard (12) at least behind the wheel (10) in relation to the direction of the movement of the vehicle **characterized** in that
- the spray-guiding means comprises a ribbed plate (16) formed from sheetlike material by corrugating it in the way that ridges (18) and recesses (24) are formed in the plate (16) and that
- in the ridges (18) facing the splash guard have been made openings (26) for guiding the spray flung upwards from the wheels through the ribbed plate (16) towards the splash guard (12).

2. A device according to claim 1, **characterized** in that the ridges are formed in the ribbed plate in the way that the spray hitting the ribbed plate will there meet an inclined surface formed by the ridges (18).

3. A device according to claim 1, **characterized** in that the ribbed plate (16) is disposed in the splash guard (12) substantially parallel thereto.

4. A device according to claim 1, **characterized** in that the ribbed plate is disposed in the splash guard in the way that the ridges (18) of the ribbed plate are substantially horizontal.

5. A device according to claim 4, **characterized** in that the ribbed plate is disposed in the splash guard in the way that the spray flung upwards from the wheel mainly meets the lower sides (22) of the wheel-facing ridges (18) of the ribbed plate at an angle (α) of 55 to 65 degrees.

6. A device according to claim 4, **characterized** in that the ribbed plate is disposed in the splash guard in the way that the upper sides (20) and the openings (26) of the wheel-facing ridges (18) of the ribbed plate are mainly in the shade of the lower sides (22) in the way that the spray flung upwards from the wheel will not directly meet the upper sides or the openings.

7. A device according to claim 4, 5 or 6 **characterized** in that the lower sides (22) of the ridges of the ribbed plate (16) are at an angle of about 50 to 60 degrees in relation to the vertical plane.

8. A device according to claim 1, **characterized** in that the ribbed plate is disposed in the splash guard in the way that the ridges (18) of the ribbed plate are substantially vertical.

9. A device according to claim 8, **characterized** in that the wheel-facing ridges (18) of the ribbed plate are unsymmetrical in the direction of the wheel (10) in the way that the spray flung upwards from the wheel will mainly hit the inner sides (36) of the ridges (18) at an angle (β) of 55 to 65 degrees and that the outer sides (34) of the ridges and the openings (26) are mainly in the shade of the inner (36) sides in relation to the spray.

10. A device according to claim 1, **characterized** in that the wheel-facing ridges of the ribbed plate are symmetrical in the way that the the spray flung upwards from the wheel meets both sides of the ridges.

11. A device according to claim 1, **characterized** in that slots which are at right angles to the direction of the ridges are formed in the ridges of the ribbed plate facing the splash guard (12).

12. A device according to claim 1, **characterized** in that slots (26) parallel to the direction of the ridges are formed in the ridges of the ribbed plate facing the splash guard (12) .

13. A device according to claim 1, **characterized** in that the ribbed plate is fabricated from a plastic sheet by moulding.

14. A device according to claim 1, **characterized** in that the ridges are about 10 to 25 mm high and that the peaks of the ridges are at a distance of about 10 to 25 mm from each other.

15. A device according to claim 1, **characterized** in that the ribbed plate is disposed in the splash guard in the way that ridges (25) of the ribbed plate facing the splash guard are at a distance of about 5 to 15 mm from it (12).
